# EUROPEAN PATENT APPLICATION

(11) **EP 4 099 628 A2**
(43) Date of publication of application: **07.12.2022**
(21) Application number: 22200797.3
(22) Date of filing: 11.10.2022
(51) Int. Cl.: H04L 9/40, H04L 9/32, G06F 21/33

(54) **METHOD AND APPARATUS OF DEPLOYING A CERTIFICATE, ELECTRONIC DEVICE, AND STORAGE MEDIUM**

(30) Priority: 11.10.2021 CN 202111184285
(71) Applicant: BEIJING BAIDU NETCOM SCIENCE AND TECHNOLOGY CO. LTD., 100085 Beijing (CN)
(72) Inventor: CHEN, Jiayi, Beijing, 100085 (CN); WANG, Bin, Beijing, 100085 (CN)
(74) Representative: Nederlandsch Octrooibureau

(57) **Abstract**

A method and an apparatus of deploying a certificate, an electronic device, a storage medium, and a program product are provided, which relate to a field of an artificial intelligence technology, in particular to cloud computing, network security and other technical fields. A specific implementation solution includes: determining site domain name information for at least one certificate to be deployed, in response to a certificate deployment request from a client, wherein the certificate deployment request is for at least one certificate of network security protocol; determining, from at least one certificate identification information related to the client, target certificate identification information matched with the site domain name information; and acquiring certificate attribute information corresponding to the target certificate identification information, so that the at least one certificate is deployed to at least one website based on the certificate attribute information.

## Description

### TECHNICAL FIELD

The present disclosure relates to a field of an artificial intelligence technology, in particular to cloud computing, network security and other technical fields. Specifically, the present disclosure relates to a method and an apparatus of deploying a certificate, an electronic device, a storage medium, and a program product.

### BACKGROUND

With a development of the Internet, there is an increasing requirement for a network transmission security. With a certificate of a network security protocol, data transmitted via a network may be encrypted to ensure that the data may not be eavesdropped or intercepted during a network transmission of the data. However, the certificate of the network security protocol needs to be deployed, enabled and updated, and operations are complicated, which increases a labor time and reduces a user experience.

### SUMMARY

The present disclosure provides a method and an apparatus of deploying a certificate, an electronic device, a storage medium, and a program product.

According to an aspect of the present disclosure, a method of deploying a certificate is provided, including: determining site domain name information for at least one certificate to be deployed, in response to a certificate deployment request from a client, wherein the certificate deployment request is for at least one certificate of network security protocol; determining, from at least one certificate identification information related to the client, target certificate identification information matched with the site domain name information; and acquiring certificate attribute information corresponding to the target certificate identification information, so that the at least one certificate is deployed to at least one website based on the certificate attribute information.

According to another aspect of the present disclosure, an apparatus of deploying a certificate is provided, including: a site determination module configured to determine site domain name information for at least one certificate to be deployed, in response to a certificate deployment request from a client, wherein the certificate deployment request is for at least one certificate of network security protocol; an identification determination module configured to determine, from at least one certificate identification information related to the client, target certificate identification information matched with the site domain name information; and an acquisition module configured to acquire certificate attribute information corresponding to the target certificate identification information, so that the at least one certificate is deployed to at least one website based on the certificate attribute information.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method as described above.

According to another aspect of the present disclosure, a non-transitory computer-readable storage medium having computer instructions therein is provided, and the computer instructions are configured to cause a computer to implement the method as described above.

According to another aspect of the present disclosure, a computer program product containing a computer program is provided, and the computer program, when executed by a processor, causes the processor to implement the method as described above.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure.
FIG. 1 schematically shows an exemplary system architecture to which a method and an apparatus of deploying a certificate may be applied according to embodiments of the present disclosure;
FIG. 2 schematically shows a flowchart of a method of deploying a certificate according to embodiments of the present disclosure;
FIG. 3 schematically shows a flowchart of determining target certificate identification information according to embodiments of the present disclosure;
FIG. 4 schematically shows a flowchart of determining target certificate identification information according to embodiments of the present disclosure;
FIG. 5 schematically shows a signaling diagram of a method of deploying a certificate according to embodiments of the present disclosure;
FIG. 6 schematically shows a signaling diagram of a method of deploying a certificate according to other embodiments of the present disclosure;
FIG. 7 schematically shows a block diagram of an apparatus of deploying a certificate according to embodiments of the present disclosure; and
FIG. 8 schematically shows a block diagram of an electronic device suitable for implementing a method of deploying a certificate according to embodiments of the present disclosure.

### DETAILED DESCRIPTION OF EMBODIMENTS

Exemplary embodiments of the present disclosure will be described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

The present disclosure relates to a method and an apparatus of deploying a certificate, an electronic device, a storage medium, and a program product.

According to embodiments of the present disclosure, the method of deploying the certificate may include: determining site domain name information for at least one certificate to be deployed, in response to a certificate deployment request from a client, wherein the certificate deployment request is for at least one certificate of network security protocol; determining, from at least one certificate identification information related to the client, target certificate identification information matched with the site domain name information; and acquiring certificate attribute information corresponding to the target certificate identification information, so that the at least one certificate is deployed to at least one website based on the certificate attribute information.

In the technical solution of the present disclosure, an acquisition, a storage, a use, a processing, a transmission, a provision, a disclosure and an application of user personal information involved comply with provisions of relevant laws and regulations, take essential confidentiality measures, and do not violate public order and good custom. In the technical solution of the present disclosure, authorization or consent is obtained from the user before the user's personal information is obtained or collected.

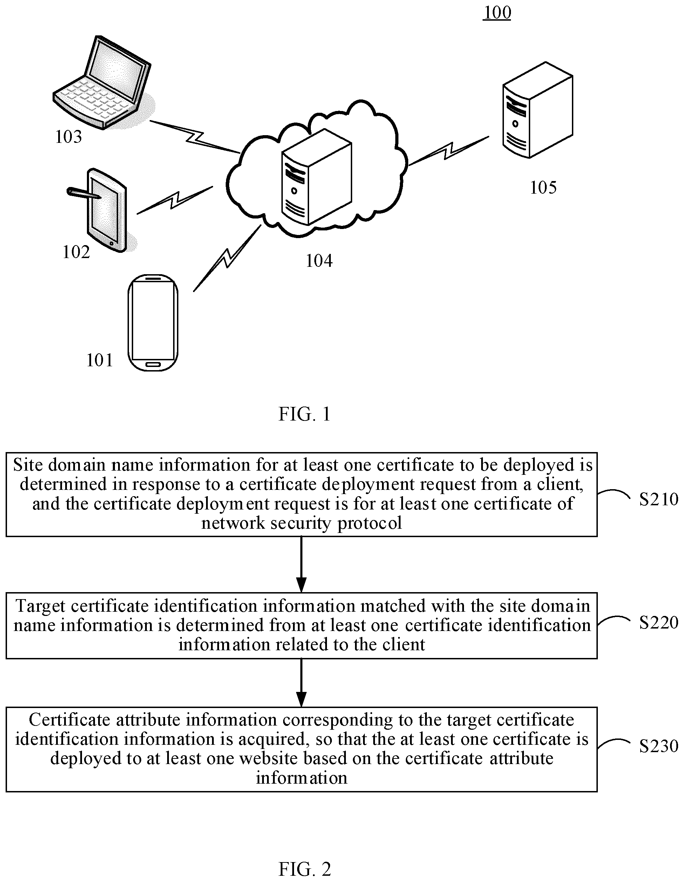

FIG. 1 schematically shows an exemplary system architecture to which a method and an apparatus of deploying a certificate may be applied according to embodiments of the present disclosure.

It should be noted that FIG. 1 is only an example of a system architecture to which embodiments of the present disclosure may be applied to help those skilled in the art understand the technical content of the present disclosure, but it does not mean that embodiments of the present disclosure may not be applied to other devices, systems, environments or scenarios. For example, in other embodiments, an exemplary system architecture to which the method and the apparatus of deploying the certificate may be applied may include a terminal device, but the terminal device may implement the method and the apparatus of deploying the certificate provided in embodiments of the present disclosure without interacting with a server.

As shown in FIG. 1, a system architecture 100 according to such embodiments may include clients 101, 102, 103, a server 104, and a website 105.

The clients may be used by a user to access the website by HTTPS (Hyper Text Transfer Protocol over secure Socket Layer). Various communication client applications may be installed on the clients 101, 102, 103, such as knowledge reading applications, web browser applications, search applications, instant messaging tools, mailbox clients and/or social platform software, etc. (for example only).

The clients 101, 102, 103 may be various electronic devices that have a display screen and support web browsing, including but not limited to smartphones, tablet computers, laptop computers, desktop computers, and the like.

According to embodiments of the present disclosure, according to a type of the client, the website may be accessed using a corresponding site domain name information. For example, site domain name information of a smartphone client is different from that of a desktop computer client.

The server 104 may be a server that provides various services, such as a background management server (for example only) that provides website hosting and access to the website 105. The background management server may be responsible for a forwarding of a website traffic and support a presentation of a website content.

The server may be a cloud server, also known as a cloud computing server or a cloud host, which is a host product in a cloud computing service system to solve shortcomings of difficult management and weak business scalability existing in an existing physical host and VPS (Virtual Private Server) service. The server may also be a server of a distributed system, or a server combined with a block-chain.

The website 105 may support a message interaction by HTTPS. The website 105 may receive an HTTPS request related to the clients 101, 102, 103 sent by the server 104, and generate an HTTPS response process and the like.

It should be noted that the method of deploying the certificate provided by embodiments of the present disclosure may generally be performed by the server 104. Accordingly, the apparatus of deploying the certificate provided by embodiments of the present disclosure may be provided in the server 104.

It should be understood that the number of clients, website and server shown in FIG. 1 is only schematic. According to implementation needs, any number of client, website and server may be provided.

FIG. 2 schematically shows a flowchart of a method of deploying a certificate according to embodiments of the present disclosure.

As shown in FIG. 2, the method includes operations S210 to S230.

In operation S210, site domain name information for at least one certificate to be deployed is determined in response to a certificate deployment request from a client, and the certificate deployment request is for at least one certificate of network security protocol.

In operation S220, target certificate identification information matched with the site domain name information is determined from at least one certificate identification information related to the client.

In operation S230, certificate attribute information corresponding to the target certificate identification information is acquired, so that the at least one certificate is deployed to at least one website based on the certificate attribute information.

According to embodiments of the present disclosure, the method of deploying the certificate may be applied to a server, such as a cloud server.

According to embodiments of the present disclosure, the server may provide the user with a technical support for website service hosting, may receive the certificate deployment request from the client, and may automatically deploy the certificate of the network security protocol between the client and the website in response to the certificate deployment request.

According to embodiments of the present disclosure, the certificate of the network security protocol may include one or more selected from a Network Authentication Protocol (Kerberos), a Secure Shell (SSH) Protocol, a Secure Electronic Transaction (SET) Protocol, a Secure Sockets Layer (SSL) Protocol, and a Network Layer Security Protocol (IP Sec).

According to exemplary embodiments of the present disclosure, an SSL certificate may be deployed between the client and the website to perform a network transmission of data by HTTPS and improve a security of the network transmission of data.

According to embodiments of the present disclosure, the site domain name information of the certificate to be deployed is determined in response to the certificate deployment request from the client. According to embodiments of the present disclosure, the certificate deployment request may contain the site domain name information of the certificate to be deployed, and then the site domain name information of the certificate to be deployed may be determined based on the certificate deployment request.

According to embodiments of the present disclosure, the site domain name information may be an information expressed in a character form, which may be used to perform a network identification on a host in a computer network. Therefore, the website to which a certificate is to be deployed may be determined by determining the site domain name information for the certificate to be deployed.

According to embodiments of the present disclosure, the certificate identification information may include, but not be limited to an information indicating a certificate identity, such as a certificate identity information. The certificate identification information may further include a common name information, such as an information related to the site domain name information for indicating the website.

According to exemplary embodiments of the present disclosure, the certificate identification information may include the certificate identity information and the common name information. The certificate identity information may be used to clarify a uniqueness of the certificate, and the common name information may be used to build a mapping relationship between the site domain name information and the certificate. By matching the common name information with the site domain name information, the target certificate identification information matched with the site domain name information may be determined from at least one certificate identification information related to the client.

According to embodiments of the present disclosure, the at least one certificate identification information related to the client may refer to at least one certificate identification information belonging to the client. If the target certificate identification information matched with the site domain name information is determined from the at least one certificate identification information related to the client, it indicates that a certificate matched with the website to which a certificate is to be deployed has been issued to the client, and then a certificate deployment operation may be performed on the website corresponding to the site domain name information with the certificate.

According to embodiments of the present disclosure, the certificate attribute information of the certificate may be acquired based on the target certificate identification information.

According to embodiments of the present disclosure, the certificate attribute information may include at least one selected from a public key information, a private key information, a name information of a certification authority, a validity start time information of the certificate, a validity expiration time information of the certificate, or other information.

According to embodiments of the present disclosure, the certificate deployment operation may be performed on the website based on the certificate attribute information. For example, the certificate attribute information may be loaded to the website.

According to embodiments of the present disclosure, the certificate may be automatically deployed between the client and the website in response to the certificate deployment request from the client, which may reduce a technical threshold, reduce a user operation, and improve a security of the website and the user experience. Moreover, by managing the certificate related to the client, it is possible to deploy certificates of various types of network security protocols. In addition, it is more intelligent and flexible to determine the target certificate identification information matched with the site domain name information from the at least one certificate identification information related to the client.

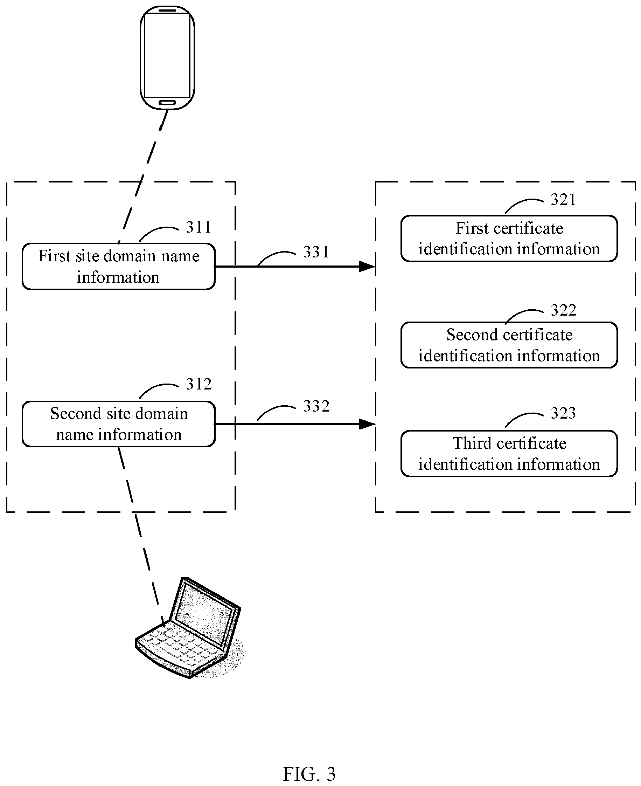

The method of deploying the certificate, for example, shown in FIG. 2, will be further described with reference to FIG. 3 to FIG. 6 in combination with specific embodiments.

According to embodiments of the present disclosure, the website may have one or more site domain name information.

For example, a plurality of site domain name information of the website may include site domain name information related to a mobile phone (that is, a mobile phone is used as the client to access the website) and site domain name information related to a laptop computer (that is, a laptop computer is used as the client to access the website).

According to embodiments of the present disclosure, when the operation S220 is performed to determine the target certificate identification information matched with the site domain name information from at least one certificate identification information related to the client, a number of the site domain name information may be identified, and a matching method may be determined according to the number of the site domain name information.

For example, in a case of one site domain name information, the target certificate identification information matched with the site domain name information may be determined directly from the at least one certificate identification information related to the client. In a case of a plurality of site domain name information, the target certificate identification information matched with the site domain name information may be determined from the at least one certificate identification information related to the client by using an asynchronous matching method.

FIG. 3 schematically shows a flowchart of determining target certificate identification information according to embodiments of the present disclosure.

As shown in FIG. 3, the number of the site domain name information related to the website is identified, and it is determined that there are a plurality of site domain name information, for example, two site domain name information. The site domain name information related to the website includes a first site domain name information 311 accessed by using a mobile phone as the client and a second site domain name information 312 accessed by using a laptop computer as the client.

The at least one certificate identification information may include a first certificate identification information 321, a second certificate identification information 322, and a third certificate identification information 323.

Target certificate identification information matched with the first site domain name information 311 accessed by the mobile phone as the client and target certificate identification information matched with the second site domain name information 312 accessed by the laptop computer as the client may be respectively determined using an asynchronous matching method, for example, with a first thread 331 and a second thread 332 by using a multi-threaded simultaneous matching method.

According to embodiments of the present disclosure, the number of the site domain name information is identified before determining the target certificate identification information matched with the site domain name information, and in the case of a plurality of site domain name information, the target certificate identification information may be matched for the plurality of site domain name information, respectively. In this way, an automatic deployment of certificates may be performed for the plurality of site domain name information at one time, so as to avoid a problem that when the client type is changed, the certificate is not deployed for a changed site domain name information corresponding to the changed client type, and the certification deployment operation needs to be performed again. In addition, the asynchronous matching method is used to simultaneously match the target certificate identification information respectively for the plurality of site domain name information, which may improve a matching efficiency.

According to embodiments of the present disclosure, in operation S210, after the site domain name information for the at least one certificate to be deployed is determined in response to the certificate deployment request, a preprocessing of a format conversion may be performed on the site domain name information.

For example, a format of the site domain name information is determined; and a format conversion is performed on the site domain name information in response to the format of the site domain name information conforming to a predetermined format conversion rule.

According to embodiments of the present disclosure, the format of the site domain name information may be a Chinese format, an English format, or a combination of the Chinese format and the English format.

According to embodiments of the present disclosure, the format of the site domain name information conforming to a predetermined format conversion rule may be understood as that the site domain name information contains an information in the Chinese format or that the site domain name information is entirely in the Chinese format.

According to embodiments of the present disclosure, if the format of the site domain name information conforms to the predetermined format conversion rule, the format conversion may be performed on the site domain name information. For example, the information in the Chinese format in the site domain name information may be converted into an information in an ASCII code format.

According to exemplary embodiments of the present disclosure, the information in the Chinese format in the site domain name information may be converted into an information in a PunnyCode domain name code (also known as ASCII code, American Standard Code for Information Interchange).

According to embodiments of the present disclosure, with the preprocessing operation of the format conversion of the site domain name information, the Chinese format not supported by a resolution service may be converted into the ASCII code format supported by the resolution service, so that the resolution service may quickly and accurately resolve the site domain name information after the format conversion, so as to facilitate a subsequent execution of a matching operation.

According to embodiments of the present disclosure, the method of deploying the certificate may further include an operation of determining the at least one certificate identification information related to the client before performing the operation S220 to determine the target certificate identification information matched with the site domain name information from the at least one certificate identification information related to the client.

According to embodiments of the present disclosure, the method of deploying the certificate may be applied to a cloud server, in which different certificate identification information for a plurality of different clients may be stored. At least one certificate identification information related to the client may be determined before determining the target certificate identification information matched with the site domain name information, so as to narrow a scope of identification.

According to exemplary embodiments of the present disclosure, a client identification information for the client is acquired; a plurality of initial certificate identification information matched with the client identification information is determined; respective validities of a plurality of certificates corresponding to the plurality of initial certificate identification information are identified; and in response to determining that at least one target certificate among the plurality of certificates is valid, at least one initial certificate identification information respectively corresponding to the at least one target certificate is determined as the at least one certificate identification information related to the client.

According to embodiments of the present disclosure, a certificate generally has a validity period, for example, a validity period is 1 year or 2 years. Before determining the target certificate identification information matched with the site domain name information, a plurality of initial certificate identification information related to the client may be determined firstly, and it may be identified whether the certificates respectively corresponding to the plurality of initial certificate identification information are valid. For example, it may be determined whether the certificate corresponding to the initial certificate identification information is still within the validity period. If the certificate is within the validity period, it is a valid certificate, that is, the certificate is valid. If the certificate is not within the validity period, it is an invalid certificate, that is, the certificate is invalid.

According to embodiments of the present disclosure, when it is determined that at least one target certificate among the plurality of certificates is valid, at least one initial identification information corresponding to the at least one target certificate is selected from the plurality of initial certificate identification information, and the at least one initial identification information respectively corresponding to the at least one target certificate is determined as the at least one certificate identification information related to the client. Accordingly, the target certificate identification information matched with the site domain name information may be determined from the at least one certificate identification information related to the client.

According to embodiments of the present disclosure, when it is determined that each of the plurality of certificates is invalid, the operation of determining the target certificate identification information matched with the site domain name information from the at least one certificate identification information related to the client may be stopped.

According to embodiments of the present disclosure, before performing the operation of determining the target certificate identification information matched with the site domain name information from the at least one certificate identification information related to the client, the respective validities of the plurality of certificates related to the client identification information are determined, then the invalid certificate may be filtered out, and the valid target certificate may be retained, so that a subsequent processing volume may be reduced, and the processing efficiency may be improved.

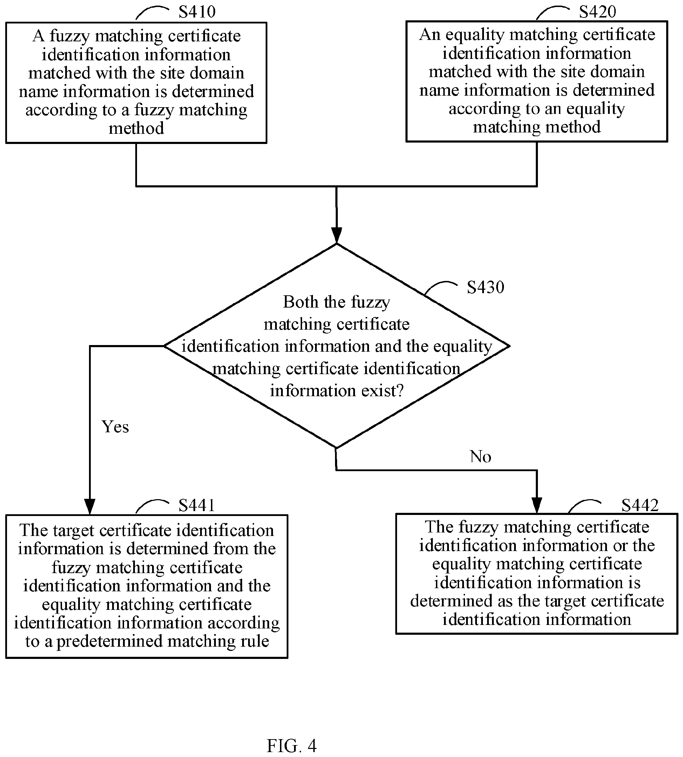

FIG. 4 schematically shows a flowchart of determining the target certificate identification information according to embodiments of the present disclosure.

As shown in FIG. 4, for each of the plurality of site domain name information, the target certificate identification information matched with the each site domain name information may be determined by performing operations S410 to S430, S441 and S442.

In operation S410, a fuzzy matching certificate identification information matched with the site domain name information is determined according to a fuzzy matching method.

In operation S420, an equality matching certificate identification information matched with the site domain name information is determined according to an equality matching method.

In operation S430, it is detected whether both the fuzzy matching certificate identification information and the equality matching certificate identification exist.

In operation S441, in response to both the fuzzy matching certificate identification information and the equality matching certificate identification information being detected, the target certificate identification information is determined from the fuzzy matching certificate identification information and the equality matching certificate identification information according to a predetermined matching rule.

In operation S442, in response to the fuzzy matching certificate identification information or the equality matching certificate identification information being detected, the fuzzy matching certificate identification information or the equality matching certificate identification information is determined as the target certificate identification information.

According to embodiments of the present disclosure, the fuzzy matching method may be a partially matching method, for example, the site domain name information is partially matched with the common name information in the certificate identification information.

For example, if the site domain name information A is "example.domain.com", and the common name information in the certificate identification information A is "*.domain.com", then the site domain name information A is matched with the common name information "*.domain.com" in the certificate identification information A according to the fuzzy matching method, and the certificate identification information A is the fuzzy matching certificate identification information.

According to exemplary embodiments of the present disclosure, the common name information in the certificate identification information may contain, for example, an extensible wildcard "*", or "?", "/" or other characters instead of one or more letters.

According to embodiments of the present disclosure, the equality matching method may be an exactly matching method, for example, the site domain name information is exactly matched with the common name information in the certificate identification information.

For example, if the site domain name information B is "example.domain.com", and the common name information in the certificate identification information B is "example.domain.com", then the site domain name information B is matched with the common name information "example.domain.com" in the certificate identification information B according to the equality matching method, and the certificate identification information B is the equality matching certificate identification information.

According to embodiments of the present disclosure, the predetermined matching rule may be that the equality matching certificate identification information is preferentially determined as the target certificate identification information. However, the present disclosure is not limited to this, and the predetermined matching rule may also be that the fuzzy matching certificate identification information is preferentially determined as the target certificate identification information.

According to exemplary embodiments of the present disclosure, the certificate identification information B may be determined as the target certificate identification information when both the common name information in the certificate identification information A and the common name information in the certificate identification information B are detected. The certificate identification information A may be determined as the target certificate identification information when only the common name information in the certificate identification information A is detected. The certificate identification information B may be determined as the target certificate identification information when only the common name information in the certificate identification information B is detected.

According to embodiments of the present disclosure, it is designed that the fuzzy matching method and the equality matching method cooperate to determine the target certificate identification information, which is more flexible and extensible while ensuring the accuracy of matching.

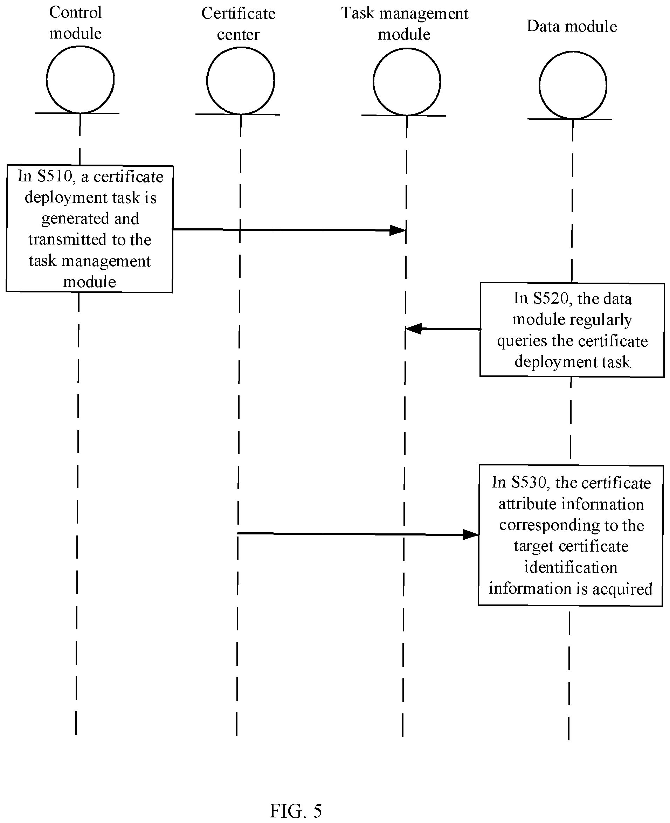

FIG. 5 schematically shows a signaling diagram of the method of deploying the certificate according to embodiments of the present disclosure.

As shown in FIG. 5, a control module, a certificate center, a task management module, and a data module may be configured on the cloud server.

The acquiring the certificate attribute information corresponding to the target certificate identification information based on the target certificate identification information may include operations S510 to S530.

In operation S510, the control module may generate a certificate deployment task based on the site domain name information and the determined target certificate identification information matched with the site domain name information, and transmit the certificate deployment task to the task management module. For example, the certificate deployment task may be put in a task queue of the task management module.

In operation S520, the data module regularly queries the certificate deployment task.

In operation S530, when the certificate deployment task is detected by the data module, the data module may acquire the certificate attribute information corresponding to the target certificate identification information from the certificate center based on the target certificate identification information.

According to embodiments of the present disclosure, the certificate attribute information may include a public key information and a private key information.

According to embodiments of the present disclosure, by containing the public key information, the private key information and other information in the certificate attribute information, an SSL handshake between the client and the website may be achieved, data to be transmitted may be encrypted through the certificate attribute information, and the encrypted data may be decrypted through the certificate attribute information, so as to achieve a secure network transmission of data under HTTPS protocol.

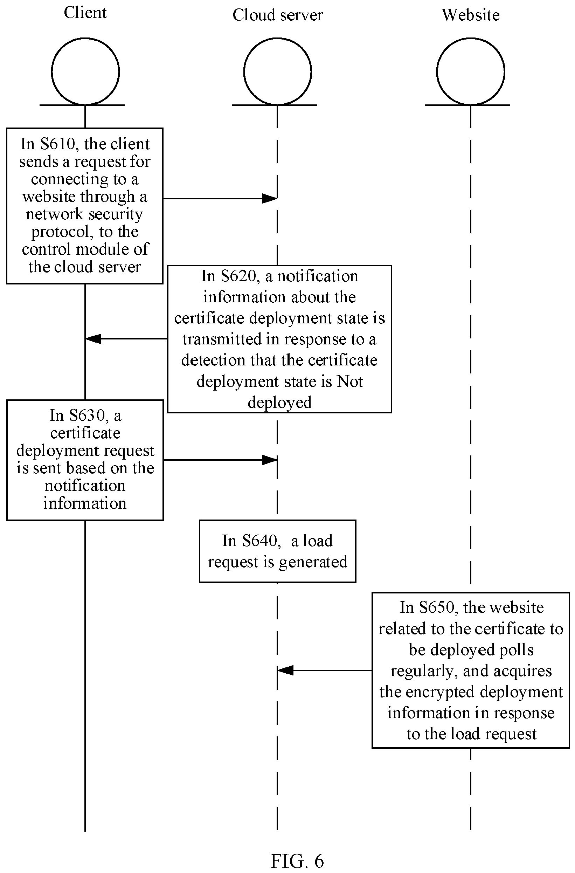

FIG. 6 schematically shows a signaling diagram of a method of deploying a certificate according to other embodiments of the present disclosure.

As shown in FIG. 6, the method of deploying the certificate may include operations S610 to S650.

In S610, a client sends a request for connecting to a website through a network security protocol, to the control module of the cloud server.

For example, the request may be a request for enabling an HTTPS function.

In S620, the cloud server detects a certificate deployment state of the client for the website in response to the request for connecting to the website through the network security protocol; and transmits a notification information about the certificate deployment state in response to a detection that the certificate deployment state is not deployed.

In S630, the client sends a certificate deployment request based on the notification information.

In S640, the cloud server determines site domain name information for the certificate to be deployed, in response to the certificate deployment request from the client; determines target certificate identification information matched with the site domain name information from at least one certificate identification information related to the client; acquires certificate attribute information corresponding to the target certificate identification information; and generate a load request based on the target certificate identification information, the certificate attribute information, and the site domain name information.

According to embodiments of the present disclosure, the information contained in the load request, such as the target certificate identification information, the certificate attribute information and the site domain name information, is an encrypted deployment information encrypted by the data module of the cloud server.

In S650, the website related to the certificate to be deployed polls the cloud server regularly, and acquires the encrypted deployment information in response to the load request.

According to embodiments of the present disclosure, the acquired encrypted deployment information includes a required target certificate information, such as the certificate attribute information. The certificate attribute information is loaded to the website to deploy the certificate of the network security protocol.

According to embodiments of the present disclosure, an HTTP request sent by a user through the client, for example, may be automatically directed to an HTTPS request, so as to establish an HTTPS communication connection between the client and the website.

The method of deploying the certificate provided in embodiments of the present disclosure may be implemented to achieve an automatic detection/deployment/switching of certificates of network security protocols, such as SSL certificates, and achieve a one-click automation process, so as to reduce a manpower consumption on the deployment of certificates of network security protocols and enhance a website security.

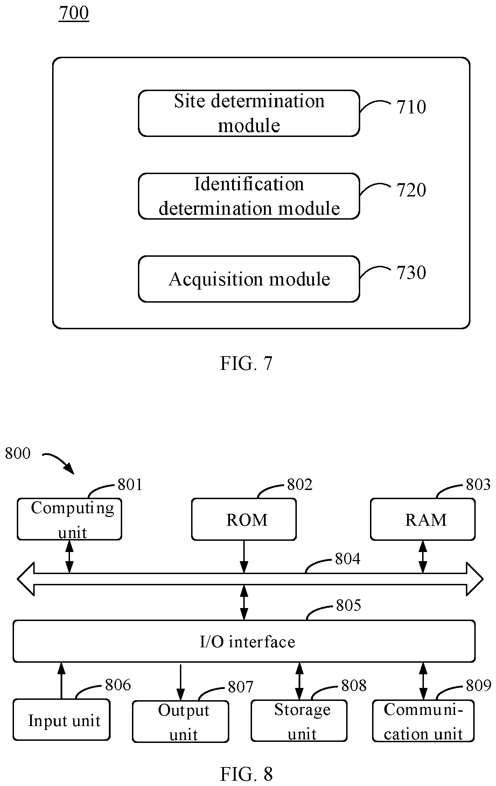

FIG. 7 schematically shows a block diagram of an apparatus of deploying a certificate according to embodiments of the present disclosure.

As shown in FIG. 7, an apparatus 700 of deploying a certificate may include a site determination module 710, an identification determination module 720, and an acquisition module 730.

The site determination module 710 is used to determine site domain name information for at least one certificate to be deployed, in response to a certificate deployment request from a client, and the certificate deployment request is for at least one certificate of network security protocol.

The identification determination module 720 is used to determine, from at least one certificate identification information related to the client, target certificate identification information matched with the site domain name information; and

The acquisition module 730 is to acquire certificate attribute information corresponding to the target certificate identification information, so that the at least one certificate is deployed to at least one website based on the certificate attribute information.

According to embodiments of the present disclosure, the identification determination module includes an identifying unit and a matching unit.

The identifying unit is used to identify a number of the site domain name information.

The matching unit is used to determine, in response to a plurality of site domain name information being detected, a plurality of target certificate identification information respectively matched with the plurality of site domain name information, from the at least one certificate identification information by using an asynchronous matching method.

According to embodiments of the present disclosure, the matching unit includes a fuzzy matching sub-unit, an equality matching sub-unit, and an identification determination sub-unit.

The fuzzy matching sub-unit is used to determine, for each of the plurality of site domain name information, a fuzzy matching certificate identification information matched with the each site domain name information, according to a fuzzy matching method.

The equality matching sub-unit is used to determine, for each of the plurality of site domain name information, an equality matching certificate identification information matched with the each site domain name information, according to an equality matching method.

The identification determination sub-unit is used to determine, in response to both the fuzzy matching certificate identification information and the equality matching certificate identification information being detected, the target certificate identification information from the fuzzy matching certificate identification information and the equality matching certificate identification information according to a predetermined matching rule.

According to embodiments of the present disclosure, the acquisition module includes a querying unit and an acquisition unit.

The querying unit is used to query a certificate deployment task regularly, and the certificate deployment task is generated based on the site domain name information and the determined target certificate identification information matched with the site domain name information.

The acquisition unit is used to acquire the certificate attribute information corresponding to the target certificate identification information based on the target certificate identification information, in response to the certificate deployment task being detected.

According to embodiments of the present disclosure, the apparatus of deploying the certificate further includes a format determination module and a format conversion module after the site determination module.

The format determination module is used to determine a format of the site domain name information.

The format conversion module is used to perform a format conversion on the site domain name information, in response to the format of the site domain name information conforming to a predetermined format conversion rule.

According to embodiments of the present disclosure, the apparatus of deploying the certificate further includes a certification determination module.

According to embodiments of the present disclosure, the certification determination module includes an identification acquisition unit, an initial certification determination unit, a validity identifying unit, and a certification determination unit.

The identification acquisition unit is used to acquire a client identification information for the client.

The initial certification determination unit is used to determine a plurality of initial certificate identification information matched with the client identification information.

The validity identifying unit is used to identify respective validities of a plurality of certificates corresponding to the plurality of initial certificate identification information.

The certification determination unit is used to determine, in response to determining that at least one target certificate among the plurality of certificates is valid, at least one initial certificate identification information respectively corresponding to the at least one target certificate as the at least one certificate identification information related to the client.

According to embodiments of the present disclosure, the apparatus of deploying the certificate further includes an encryption module and a generation module.

The encryption module is used to encrypt the target certificate identification information, the certificate attribute information and the site domain name information to generate an encrypted deployment information.

The generation module is used to generate a load request based on the target certificate identification information, the certificate attribute information and the site domain name information, so that the encrypted deployment information is acquired by a website related to the certificate to be deployed based on the load request.

According to embodiments of the present disclosure, the apparatus of deploying the certificate further includes a detection module and a transmission module.

The detection module is used to detect a certificate deployment state of a client for the website, in response to a request for connecting to the website through a network security protocol.

The transmission module is used to transmit a notification information about the certificate deployment state, in response to a detection that the certificate deployment state is not deployed, so that the client sends the certificate deployment request based on the notification information.

According to embodiments of the present disclosure, the present disclosure further provides an electronic device, a readable storage medium, and a computer program product.

According to embodiments of the present disclosure, an electronic device is provided, including: at least one processor; and a memory communicatively connected to the at least one processor. The memory stores instructions executable by the at least one processor, and the instructions, when executed by the at least one processor, cause the at least one processor to implement the methods as described above.

According to embodiments of the present disclosure, a non-transitory computer-readable storage medium having computer instructions therein is provided, and the computer instructions are used to cause a computer to implement the methods as described above.

According to embodiments of the present disclosure, a computer program product containing a computer program is provided, and the computer program, when executed by a processor, causes the processor to implement the methods as described above.

FIG. 8 shows a schematic block diagram of an exemplary electronic device 800 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 8, the electronic device 800 includes a computing unit 801 which may perform various appropriate actions and processes according to a computer program stored in a read only memory (ROM) 802 or a computer program loaded from a storage unit 808 into a random access memory (RAM) 803. In the RAM 803, various programs and data necessary for an operation of the electronic device 800 may also be stored. The computing unit 801, the ROM 802 and the RAM 803 are connected to each other through a bus 804. An input/output (I/O) interface 805 is also connected to the bus 804.

A plurality of components in the electronic device 800 are connected to the I/O interface 805, including: an input unit 806, such as a keyboard, or a mouse; an output unit 807, such as displays or speakers of various types; a storage unit 808, such as a disk, or an optical disc; and a communication unit 809, such as a network card, a modem, or a wireless communication transceiver. The communication unit 809 allows the electronic device 800 to exchange information/data with other devices through a computer network such as Internet and/or various telecommunication networks.

The computing unit 801 may be various general-purpose and/or dedicated processing assemblies having processing and computing capabilities. Some examples of the computing units 801 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 801 executes various methods and steps described above, such as the method of deploying the certificate. For example, in some embodiments, the method of deploying the certificate may be implemented as a computer software program which is tangibly embodied in a machine-readable medium, such as the storage unit 808. In some embodiments, the computer program may be partially or entirely loaded and/or installed in the electronic device 800 via the ROM 802 and/or the communication unit 809. The computer program, when loaded in the RAM 803 and executed by the computing unit 801, may execute one or more steps in the method of deploying the certificate described above. Alternatively, in other embodiments, the computing unit 801 may be configured to perform the method of deploying the certificate by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of deploying a certificate, comprising:
determining (S210) site domain name information for at least one certificate to be deployed, in response to a certificate deployment request from a client, wherein the certificate deployment request is for at least one certificate of network security protocol;
determining (S220), from at least one certificate identification information related to the client, target certificate identification information matched with the site domain name information; and
acquiring (S230) certificate attribute information corresponding to the target certificate identification information, so that the at least one certificate is deployed to at least one website based on the certificate attribute information.

2. The method according to claim 1, wherein the determining (S220), from at least one certificate identification information related to the client, target certificate identification information matched with the site domain name information comprises:
identifying a number of the site domain name information; and
determining, in response to a plurality of site domain name information being detected, a plurality of target certificate identification information respectively matched with the plurality of site domain name information, from the at least one certificate identification information by using an asynchronous matching method.

3. The method according to claim 2, wherein the determining, in response to a plurality of site domain name information being identified, a plurality of target certificate identification information respectively matched with the plurality of site domain name information, from the at least one certificate identification information by using an asynchronous matching method comprises:
determining (S410), for each site domain name information of the plurality of site domain name information, a fuzzy matching certificate identification information matched with the each site domain name information, according to a fuzzy matching method;
determining (S420), for each site domain name information of the plurality of site domain name information, an equality matching certificate identification information matched with the each site domain name information, according to an equality matching method; and
determining (S441), in response to both the fuzzy matching certificate identification information and the equality matching certificate identification information being detected, the target certificate identification information from the fuzzy matching certificate identification information and the equality matching certificate identification information according to a predetermined matching rule.

4. The method according to claim 1, wherein the acquiring (S230) certificate attribute information corresponding to the target certificate identification information based on the target certificate identification information comprises:
querying (S520) a certificate deployment task regularly, wherein the certificate deployment task is generated based on the site domain name information and the determined target certificate identification information matched with the site domain name information; and
acquiring (S530) the certificate attribute information corresponding to the target certificate identification information based on the target certificate identification information, in response to the certificate deployment task being detected.

5. The method according to claim 1, further comprising: after determining (S210) the site domain name information of the at least one certificate to be deployed, in response to the certificate deployment request,
determining a format of the site domain name information; and
performing a format conversion on the site domain name information, in response to the format of the site domain name information conforming to a predetermined format conversion rule.

6. The method according to claim 1, further comprising:
determining the at least one certificate identification information related to the client, comprising:
acquiring a client identification information for the client;
determining a plurality of initial certificate identification information matched with the client identification information;
identifying respective validities of a plurality of certificates corresponding to the plurality of initial certificate identification information; and
determining, in response to determining that at least one target certificate among the plurality of certificates is valid, at least one initial certificate identification information respectively corresponding to the at least one target certificate as the at least one certificate identification information related to the client.

7. The method according to claim 1, further comprising:
encrypting the target certificate identification information, the certificate attribute information and the site domain name information to generate (S640) an encrypted deployment information; and
generating a load request based on the target certificate identification information, the certificate attribute information and the site domain name information, so that the encrypted deployment information is acquired (S650) by a website related to the certificate to be deployed based on the load request.

8. The method according to claim 1, further comprising:
detecting a certificate deployment state of a client for the website, in response to a request for connecting to the website through a network security protocol; and
transmitting (S620) a notification information about the certificate deployment state, in response to a detection that the certificate deployment state is not deployed, so that the client sends (S630) the certificate deployment request based on the notification information.

9. The method according to claim 1, wherein the certificate attribute information comprises a public key information and a private key information.

10. An apparatus (700) of deploying a certificate, comprising:
a site determination module (710) configured to determine site domain name information for at least one certificate to be deployed, in response to a certificate deployment request from a client, wherein the certificate deployment request is for at least one certificate of network security protocol;
an identification determination module (720) configured to determine, from at least one certificate identification information related to the client, target certificate identification information matched with the site domain name information; and
an acquisition module (730) configured to acquire certificate attribute information corresponding to the target certificate identification information, so that the at least one certificate is deployed to at least one website based on the certificate attribute information.

11. The apparatus (700) according to claim 10, wherein the identification determination module (720) comprises:
an identifying unit configured to identify a number of the site domain name information; and
a matching unit configured to determine, in response to a plurality of site domain name information being detected, a plurality of target certificate identification information respectively matched with the plurality of site domain name information, from the at least one certificate identification information by using an asynchronous matching method,
preferably, wherein the matching unit comprises:
a fuzzy matching sub-unit configured to determine, for each site domain name information of the plurality of site domain name information, a fuzzy matching certificate identification information matched with the each site domain name information, according to a fuzzy matching method;
an equality matching sub-unit configured to determine, for each site domain name information of the plurality of site domain name information, an equality matching certificate identification information matched with the each site domain name information, according to an equality matching method; and
an identification determination sub-unit configured to determine, in response to both the fuzzy matching certificate identification information and the equality matching certificate identification information being detected, the target certificate identification information from the fuzzy matching certificate identification information and the equality matching certificate identification information according to a predetermined matching rule,
preferably, wherein the acquisition module (730) comprises:
a querying unit configured to query a certificate deployment task regularly, wherein the certificate deployment task is generated based on the site domain name information and the determined target certificate identification information matched with the site domain name information; and
an acquisition unit configured to acquire the certificate attribute information corresponding to the target certificate identification information based on the target certificate identification information, in response to the certificate deployment task being detected.

12. The apparatus (700) according to claim 10, further comprising:
a format determination module configured to determine a format of the site domain name information; and
a format conversion module configured to perform a format conversion on the site domain name information, in response to the format of the site domain name information conforming to a predetermined format conversion rule,
preferably, the apparatus (700) further comprises a certification determination module, comprising:
an identification acquisition unit configured to acquire a client identification information for the client;
an initial certification determination unit configured to determine a plurality of initial certificate identification information matched with the client identification information;
a validity identifying unit configured to identify respective validities of a plurality of certificates corresponding to the plurality of initial certificate identification information; and
a certification determination unit configured to determine, in response to determining that at least one target certificate among the plurality of certificates is valid, at least one initial certificate identification information respectively corresponding to the at least one target certificate as the at least one certificate identification information related to the client,
preferably, the apparatus (700) further comprises:
an encryption module configured to encrypt the target certificate identification information, the certificate attribute information and the site domain name information to generate an encrypted deployment information; and
a generation module configured to generate a load request based on the target certificate identification information, the certificate attribute information and the site domain name information, so that the encrypted deployment information is acquired by a website related to the certificate to be deployed based on the load request,
preferably, the apparatus (700) further comprises:
a detection module configured to detect a certificate deployment state of a client for the website, in response to a request for connecting to the website through a network security protocol; and
a transmission module configured to transmit a notification information about the certificate deployment state, in response to a detection that the certificate deployment state is not deployed, so that the client sends the certificate deployment request based on the notification information.

13. An electronic device (800), comprising:
at least one processor; and
a memory communicatively connected to the at least one processor, wherein the memory stores instructions executable by the at least one processor, and the instructions, when executed by the at least one processor, cause the at least one processor to implement the method according to any one of claims 1 to 9.

14. A non-transitory computer-readable storage medium having computer instructions therein, wherein the computer instructions are configured to cause a computer to implement the method according to any one of claims 1 to 9.

15. A computer program product containing a computer program, wherein the computer program, when executed by a processor, causes the processor to implement the method according to any one of claims 1 to 9.
